# EUROPEAN PATENT SPECIFICATION

(11) **EP 2 596 977 B1**
(45) Date of publication and mention of the grant of the patent: **03.09.2014**
(21) Application number: 11190553.5
(22) Date of filing: 24.11.2011
(51) Int. Cl.: B60K 35/00, H02J 7/00

(54) **Performance indicator for an electric vehicle**
Leistungsanzeige für ein elektrisches Fahrzeug
Indicateur de performance pour véhicule électrique

(43) Date of publication of application: 29.05.2013
(73) Proprietor: ATS Group (IP Holdings) Limited, Road Town, Tortola (VG)
(72) Inventor: Weber, Trudy, 64295 Darmstadt (DE)
(74) Representative: Pearl Cohen Zedek Latzer Baratz UK LLP

(56) References cited:
- US-A1- 2008 030 169

## Description

### Technical Field

In general, the description relates to data-processing, and more in particular, it relates to the calculation of driving ranges of battery electric vehicles and of the lifetime of the batteries in these vehicles.

### Background

Conventional road vehicles (passenger cars, lorries, trucks, bikes...) with combustion engines use fuel (gasoline, petrol, diesel etc.) from their built-in fuel tanks. The tanks contribute to the load that the vehicles have to carry, which may be significant since they are made of steel, although other light weight materials are emerging. It has been established that tank volumes (e.g., 30 to 100 liter of fuel for a passenger car) allow the vehicles to drive in a range up to 1000 kilometers (km) or more. Looking at the input of the tanks, vehicles can be refueled within minutes at petrol stations that are distributed along the roads. Some vehicles are refueled very often even of the tanks are quite full (e.g., rental cars upon return), some vehicles are only refueled when the tanks are empty. Looking at the output of the tanks, the fuel is transmitted to the engine to propel the vehicle and is consumed at different rates, depending on, among other factors, the driving style of the driver). But for the lifetime of the tank, refueling behavior (tank input) or fuel consumption (tank output) do not show influence.

Electric road vehicles (also passenger cars, lorries, trucks, bikes, "EVs" in short, and often distinguished by an "e-" suffix, as in "e-bike") have electric motors that derive electrical energy from built-in or on-board batteries. (Vehicles with replaceable batteries are contemplated, but during driving, the batteries are attached to the car). Likewise, the batteries contribute to the vehicle load. But the engine/motor and tank/battery analogies stop at this point.

Battery capacities allow the vehicles to be driven up to a 200 km range. Using batteries with larger capacities would be too expensive (in cost and load). A network of battery charging stations is not yet established, and charging is a matter of hours, not minutes. Before and while driving, the drivers need to be very aware of the expected remaining range until the battery needs to be recharged. To express the driver's concern the expression "range anxiety" has been established.

Regarding lifetime, batteries are combinations of high-tech cells that need to be balanced by electronic circuitry. The cells contain expensive materials (e.g., lithium-ion, or nickel metal hydride (NiMH) in which chemical and physical processes store electrical energy. Looking at the input to the batteries, they are sensitive to the recharging pattern, for example, frequent recharging at full charge current reduces the lifetime. Looking at the output, they are also sensitive to the way energy is forwarded to the motor. For example, the driving behavior does matter, and fast acceleration of the vehicle draws high electrical current from the battery, which is considered to be harmful to the battery.

Shortly returning to conventional vehicles, the drivers, for example, look at fuel meters that indicate the status of the tank, look at on-board computers that calculate a remaining driving range (based on current fuel consumption, velocity etc.), or read a recommendation from a navigation system to stop at the nearest fueling station. The lifetime of the tanks is usually not an issue: tanks survive cars.

But with electric cars, the situation is again different: to calculate the remaining driving range of the vehicle or to calculate the expected remaining lifetime of the battery, there is much more data to be taken into account, and relationships between the data are highly complex.

US 2008/0030169 A discloses the preamble of claim 1.

### Summary

The range of the electric vehicle and the lifetime of the battery are performance indicators that will be provided. There are many parameters to take into account, and furthermore, parameters are available at different points in time and with sometimes unexpected occurrences, and potentially with influences on each other. To reduce complexity and computational efforts to deal with such and other constraints, the solution approach divides calculations into separate calculation models (or presentation formats) and selects the application of models according to priorities, internal/external parameters, computational complexity etc. That allows for real-time calculations after parameters become available so that the calculation results can be presented to users for making decisions. For example, the range indicator can be presented to the driver while driving; the lifetime indicator can be presented to the management of a vehicle fleet.

For both performance indicators, undesired events such as battery failure while driving (range aspect) or quick degradation (lifetime aspect) can be anticipated. Countermeasures can be suggested so that the undesired events can eventually be avoided.

In general, the description refers to a computer-implemented method for obtaining a performance indicator for a vehicle with an electric motor that is powered by energy from an on-board battery. Parameters are received that are related to the operation of the vehicle, a first calculation model is selected. The first calculation model has a predefined first complexity type. A first parameter subset is selected from the received parameters, and the first calculation model and the first parameter subset are used to calculate a preliminary performance indicator. Upon receiving further parameters, a second calculation model is selected. The second calculation model has a predefined second complexity type that in comparison indicates equal or higher complexity than the first complexity type of the first calculation model. A second parameter subset of the received further parameters is selected, and the second calculation model and the second parameter subset are used to calculate the performance indicator.

In an example implementation, selecting the second calculation model is based on pre-assigned priorities for some of the parameters so that parameter priority overrules complexity. The preliminary indicator can be an input parameter for the second calculation model. Receiving parameters, selecting calculation models and calculating indicators can be repeated with up-dated instances of the parameters. The comparison is being re-set upon receiving new parameters. Selecting further calculation models can be deferred until the use of the second calculation model is completed. Selecting the calculation models can be based on a pre-assigned execution sequence for calculation models.

In an example implementation, the complexity types of the calculation models can be derived from the processor resource consumption, wherein complexity increases with resource consumption.

In an example implementation, the performance indicator can be the driving range for the vehicle. Receiving parameters and using calculation models can be executed while the vehicle obtains electrical energy from its battery.

In an example implementation, the method is executed by a processor that is mounted on the vehicle. In this case, the processor would receive the parameters that are related to the operation of the vehicle from sensors that are also mounted on the vehicle. The processor can also receive further parameters from sensors that are located outside the vehicle.

In an example implementation, the method is executed by a processor that is located outside the vehicle. In this case, parameters are bi-directionally communicated between the processor and the vehicle through a radio interface. Also, the processor can execute the method in parallel for multiple vehicles (for example, of a fleet).

In an example implementation, the performance indicator can be a life-time value for the battery. Optionally, during initial executions of the method, the performance indicator can be the range of the vehicle, and for further executions, the performance indicator can be the life-time value for the battery.

In a further general aspect, a computer program product that - when loaded into a memory of a computer and being executed by at least one processor of the computer - can perform the steps of the method.

In a still further general aspect, a computer for obtaining a performance indicator for a vehicle with electric motor that is powered by energy from an on-board battery comprises: a parameter selector module to select first and second parameter subset from parameters that relate to the operation of the vehicle, and a model selector module to select a first calculation model with a predefined first complexity type for calculating a preliminary performance indicator from the first parameter subset. When further parameters become available, the module selects a second calculation model with a predefined second complexity type that in comparison indicates equal or higher complexity than the first complexity type of the first calculation model. The computer then calculates the performance indicator from the second parameter subset.

In an example implementation, in the computer, the selector module selects the second calculation model based on pre-assigned priorities for some of the parameters so that parameter priority overrules complexity.

In an example implementation, the function of the modules is executed by a processor that is mounted on the vehicle. The preliminary indicator can be an input parameter for the second calculation model. The selector module can repeat the operations with up-dated instances of the parameters, and can re-set the comparison upon receiving new parameters. The selector module can defer the selection of new parameters and models until the use of the second calculation model is completed. The selector module can operate on a pre-assigned execution sequence for calculation models. The complexity types of the calculation models can be derived from the processor resource consumption, wherein complexity increases with resource consumption.

In an example implementation, the performance indicator can be a driving range for the vehicle. In that case, the parameters are received and the calculation models are used while the vehicle obtains electrical energy from its battery. The processor can receive the parameters that are related to the operation of the vehicle from sensors that are also mounted on the vehicle. Alternatively, the processor can receive the further parameters from sensors that are located outside the vehicle.

In an example implementation, the processor can be located outside the vehicle. In this case, parameters can be bi-directionally communicated between the processor and the vehicle through a radio interface. Optionally, the processor executes the method in parallel for multiple vehicles.

In an example implementation, the performance indicator can be a life-time value for the battery. Optionally, during initial executions, the performance indicator can be a range of the vehicle, and for further executions, the performance indicator can be the life-time value for the battery.

### Brief Description of the Drawings

FIG. 1 is a block-diagram of a vehicle with an electric motor and a battery as well as an onboard processor to obtain a performance indicator that alternatively relates to the range of the vehicle or to the lifetime of the battery;
FIG. 2 is a simplified geographic map to describe the example of a first illustrative scenario;
FIG. 3 is a block diagram of a central computer that communicates with a car fleet to describe the example of a second illustrative scenario;
FIG. 4 is a collection of block diagrams for calculation models with various complexity;
FIG. 5 is an overview to a model to calculate the tractive force F to propel the vehicle;
FIG. 6 is a block diagram of a processor that obtains the performance indicators with details regarding the selection of parameters and calculation models;
FIG. 7 is a copy of the simplified map of FIG. 2 with indications of calculation models with different complexity types that are selected consecutively and parameter driven; and
FIG. 8 is a flow chart of a computer-implemented method for obtaining the performance indicator.

### Detailed description

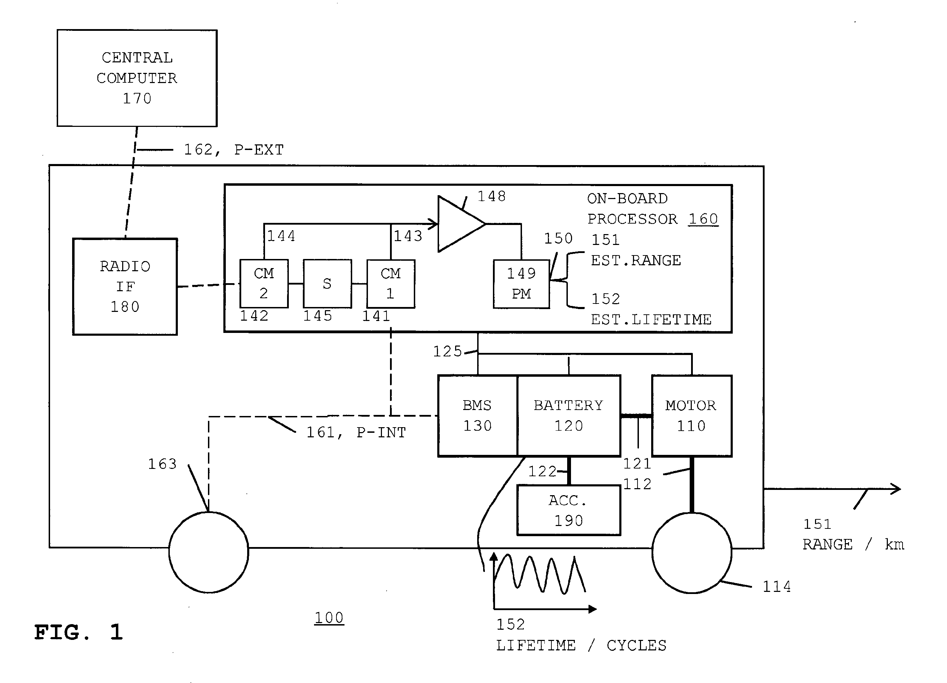

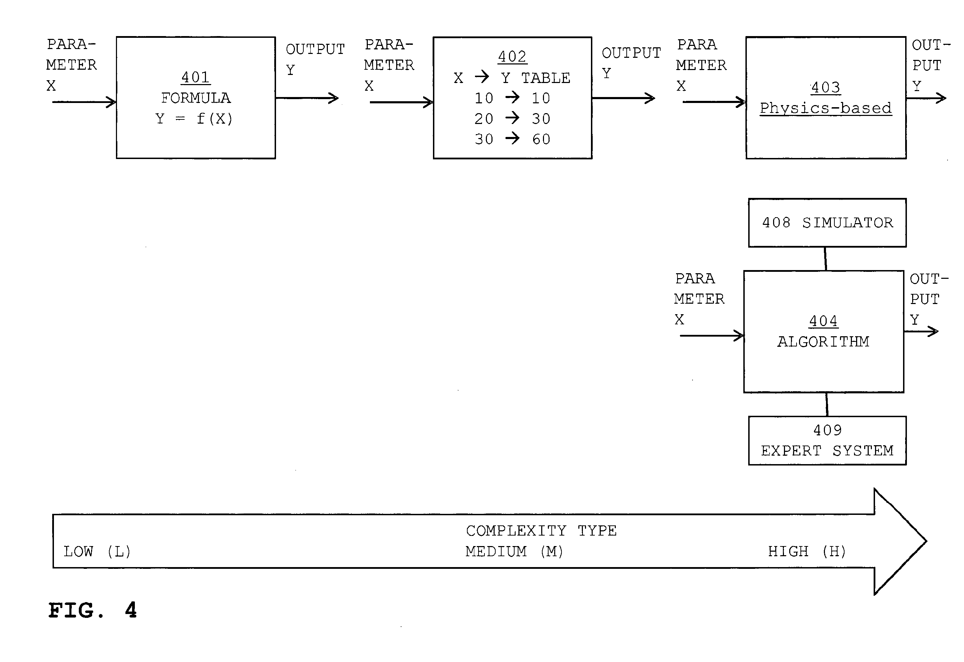

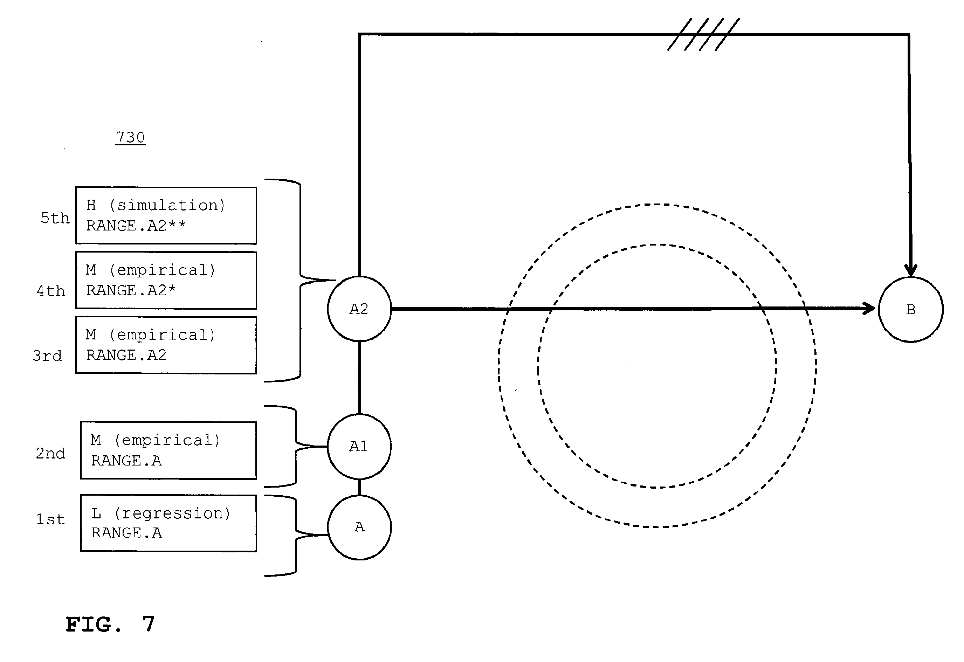

The following description begins (FIGS. 1-3) with a vehicle overview and two usage scenarios, continues (FIGS. 4-6) with details for calculation models and model selection in a processor, and closes (FIGS. 7-8) by summarizing a method, including a further usage scenario discussion.

FIG. 1 is a block-diagram of a vehicle 100 with an electric motor 110 and a battery 120 as well as an onboard processor 160 to obtain a performance indicator 150 that alternatively relates to the range 151 of the vehicle or to the lifetime value 152 of the battery 120.

Range 151 is illustrated by an arrow showing into the driving direction of the vehicle. Range 151 is conveniently a single numeric value, for example, given in kilometers (km), or in miles. However, the range can have other formats such as the percentage of the remaining distance to a destination, and/or as a binary value indicating if the vehicle can reach a destination without re-charging the battery (or not).

Battery lifetime value 152 is symbolized by a charge-over-time diagram and can be given as a single numeric value, for example, as the number of remaining charge-discharge cycles until the battery becomes useless. (Battery manufacturer usually provide an overall number of cycles, e.g., 1000 cycles). For example, the lifetime can be defined (so-called "Cycle Life") as the number of charge/discharge cycles at 80 % to 100 % DoD (Depth of Discharge) until the battery reaches 70 % of its original capacity.

However, the lifetime, among other outputs, can have other formats as well: an indication of time (as the name suggests, in months, or years), an indication of recommended driving patterns (e.g., flatland only, or city driving only), or even restrictions on drivers given their driving style history.

The figure also illustrates central computer 170, that is optional and that is not part of vehicle 100.

Relevant to the explaining the solution approach, vehicle 100 is illustrated with wheels 114, electric motor 110, battery 120 with battery-management system (BMS) 130, onboard computer processor 160 ("onboard computer processor device OBC"), and radio interface 180 ("Radio IF"). Of course, vehicle 100 has other components that are needed for operation, such as a steering wheel, brakes, headlamps, driver seats, and sensors. To keep focus, some of the other components are not illustrated. Accessories 190 collectively represent an air conditioner system, a navigation system, a cooling system (for motor and battery), windshield wipers, an infotainment system, power assisted steering system, back-mirror adjusters or other powered components. Accessories 190 consume energy, and some of them consume energy even while the vehicle is not in motion (e.g., air conditioner).

Almost all components are powered with electrical energy from battery 120. BMS 130 manages battery 120 for example with regard to safety (prevent overheating) and - through its thermal management system - reduces battery cell aging.

To keep the figure easy to understand, electrical power connections are symbolized by power connector 121 (bold solid line) from battery 120 to motor 110 and by power connector 122 from battery 120 to accessories 190. Electric motor 110 is mechanically connected to move wheels 114 via drive train 112 (bold solid line, also referred to as "drive train"), which may include mechanical gears.

Signal bus 125 (thin solid line) connects processor 160 with electric components (e.g., BMS 130, battery 120, motor 110) to transmit data and/or control signals. Dashed lines indicate bi-directional signal flows between processor 160 and radio interface 180, to/from accessories 190, or to/from some other sensors 163. For example, central computer 170 communicates with radio interface through wireless technology (e.g., a communication network such as a cellular phone network, or by broadcasting signals from public radio stations).

Looking at the information content of the signals, the figure gives examples for parameters: there are internal parameters 161 (P.INT, e.g., from sensor 163 to processor 160) and external parameters 162 (P.EXT, e.g., from central computer 170).

Modules 141, 142, 145, 148, and 149 (inside processor 160) are examples for computer-implemented functions and implementations of calculation models. A module is, for example, a program code loaded to memory that can be executed by a processor (e.g., processor 160, or by central computer 170). The program code usually follows a model. The modules are conveniently distinguished into calculator (CM) 141, 142, selector 145, comparator 148, and presentation 149. The underlying models are explained below in connection with FIGS. 4.

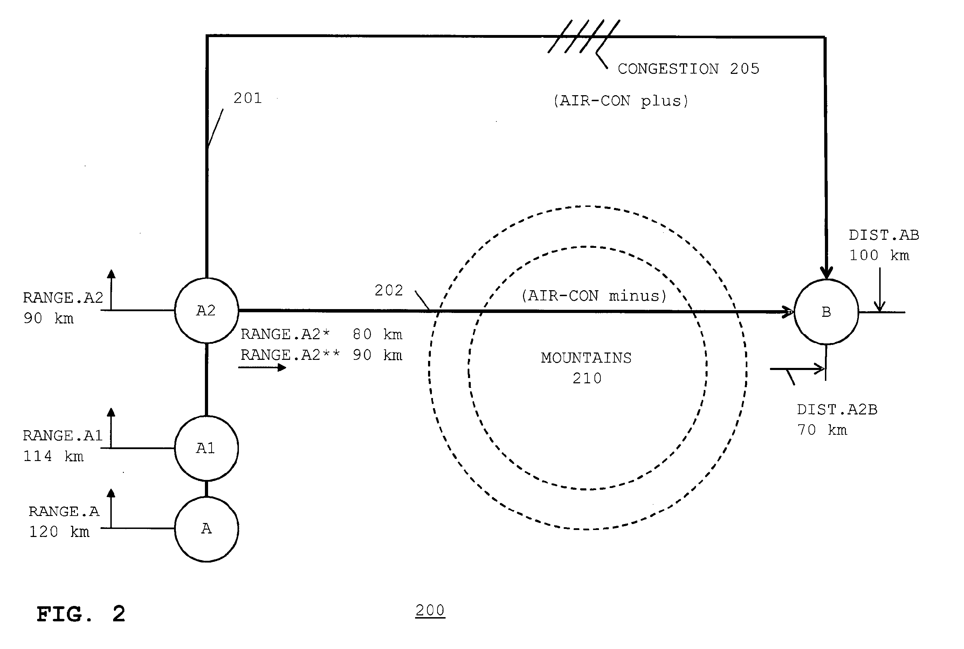

FIG. 2 is a simplified geographic map to describe the example of a first illustrative scenario. When mentioning a first, second, third, fourth, and fifth "selection of a calculation model", the description of FIG. 2 refers to FIG 7. In the scenario, every time a different model is being selected, and the models may have different complexity.

The first scenario 200 focuses on the range and will be described with a vehicle that is a passenger car. The driver uses a car from a fleet that is managed centrally by a fleet management service. The service operates a central computer (cf. FIG. 1/170). The cars are equipped with onboard computers (cf. FIG. 1/160).

The driver is also the user of (at least) the onboard computer. He needs to know if the vehicle can reach the destination, so that he is relieved from the above-mentioned "range anxiety". Further, in case of unexpected events, the driver receives reliable advice for the next actions. In view of traffic safety, he can concentrate on driving the car, and is not being confronted with technical details, for example, regarding the state-of-charge of the battery.

As in the example, the assistance to the driver can be personalized and given to the particular driver to reach a requested destination.

The driver needs to go from start location A to destination location B. The original route 201 is U-shaped on flat land to go around some mountains. (Mountains 210 are illustrated by dashed concentric circles). The route has a driving distance of 100 km (DIST.AB = 100 km). The management service assigns him a car for that the battery provides an initial estimated driving range of 120 km (RANGE.A = 120 km). This initial range is not necessarily related to the route, it can be a range for average route conditions. When starting to drive - at location A - the onboard computer is switched on automatically and - by the first selection of a calculation model - starts to calculate the range by reading a charge status parameter from the battery and looking up in a look-up table for a corresponding range. The calculation resulted in a value of 120 km to confirm the initial estimation. For confirmation purposes it is sufficient that both values are within a tolerance band of, for example, 10 %.

Shortly after that (a couple of minutes) - at location A1 - the onboard computer receives further parameters that are available internal to the car (intrinsic parameters, cf. 161 in FIG. 1), such as velocity (in kilometers per hour, km/h; or meters per second, m/s), outside air temperature (e.g., 30° C), air conditioner target temperature (e.g., 18° C). Based on the second selection of a calculation model - in this cases a simulation using updated parameters - the onboard computer provides a more accurate new range RANGE.A1 =114 km.

So far, nothing is communicated to the driver, because the estimated range (RANGE.A1 = 114 km) is still larger than the distance (DIST.AB = 100 km).

But the situation changes immediately. A couple of minutes later, at location A2, about 10 km on the way from A, the central computer (from the fleet management) communicates further parameters (cf. P-EXT, 162) to the onboard computer, in the example, that (i) the original route 201 shows traffic congestion 205, that (ii) the travel time delay would be half an hour, that (iii) an alternative route 202 is available at less distance (70 km from A2 to B, DIST.A2B = 70 km), and communicates (iv) the profile of the alternative route. The onboard computer immediately recognizes these parameters as having priority. The consequence is the third selection of a calculation model (e.g., to consider energy consumption of waiting half an hour with switched on air conditioner "air-con plus"), to be RANGE.A2 = 90 km (from A2 to B, original route 201). The onboard computer also performs the fourth selection of a calculation model (parameters (iii) and (iv)) to calculate the range via alternative route 202 to be 80 km (RANGE.A2* = 80 km).

Having used the models that are related to priority parameters (in the example, traffic congestion (i) and delay (ii)), the onboard computer has now sufficient resources to look at other parameters, for example, the onboard computer requests the outside temperature along the alternative route. The fifth selection of a calculation model now leads to a calculation that the air conditioner (cf. 122 in FIG. 1) can be switched off ("air-con minus") so that a new range RANGE.A2** via alternative route 202 (over the "cold" mountains) is available at 90 km.

The onboard computer communicates the suggestion to go across the mountains, but to switch off the air conditioner.

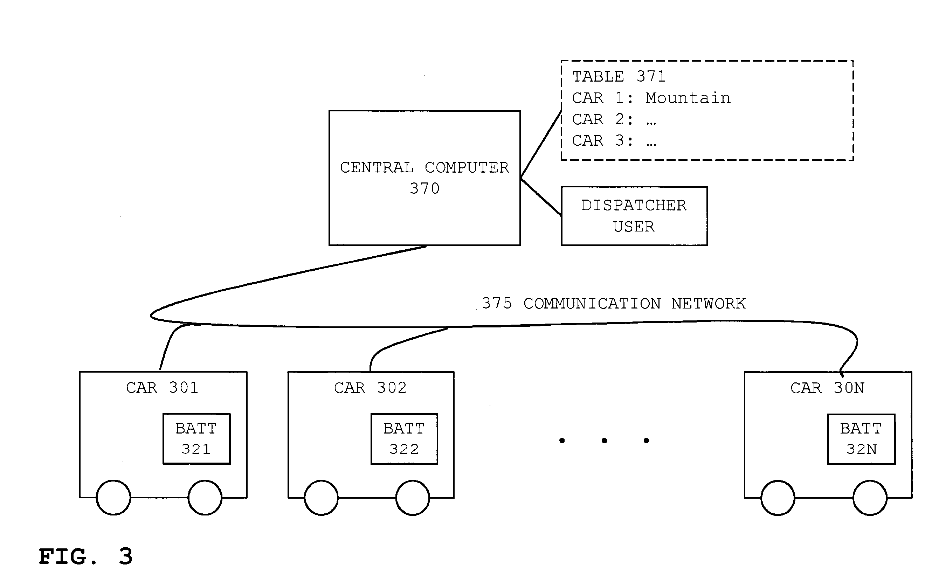

FIG. 3 is a block diagram of a central computer that communicates with a car fleet to describe the example of a second illustrative scenario. That second scenario addresses the lifetime of the battery with focus on the service the fleet management provides. As mentioned, the service operates a central computer 370, and cars 301, 302 ... 30N have onboard computers. There are many drivers, many cars (e.g., N cars), many different trips made every day, and many different events. The user here in this scenario could be a person who works for the fleet management as a dispatcher. She needs to know from central computer 370, if there are any upcoming issues with one the batteries in the cars. For example, batteries at the end of the lifetime should be replaced before a car suddenly stops on the road. Or, even more important, the lifetime of each battery should be stretched to a maximum. Central computer 370 and cars 301, 302, 30N (i.e. the onboard computers) exchange data via communication network 375, the data relates to the routes, and to the batteries.

Data (i.e., parameters, intermediate calculation results, performance indicators) are exchanged in downlink direction (central computer to car) and in uplink direction (car to central computer). The bandwidth is potentially different for the downlink data transfer and for the uplink data transfer, thus influencing what data will be exchanged and at what rates.

Shortly returning to the first scenario, the original route (A to B) goes across flat terrain and the alternative route crosses the mountains (A2 to B). Supposing that using the alternative route with the uphill-downhill profile will make higher power output demands on the battery (high-current / low-current stress to the battery). So data that is being collected for the particular battery indicates - by selection of a calculation model - that the battery experienced above-average current fluctuations. Such a single data-point is likely not sufficient to calculate any life-time variation for the battery, but in further calculations and analysis, with the selection of additional models, and with further data (from the same or other drivers, same or other routes), a set of rules and recommendations for improved battery usage can be obtained. Such recommendations belong to the performance indicators, especially to the indicator relating to battery life-time. Indicators including the recommendations are specific to particular batteries and therefore also to the particular vehicle that is associated with that battery. For example, a recommendation could be given to the user that - for a vehicle that uses that particular battery - the mountain route is no longer recommended. Further, calculation parameters can be made more precise.

In example of FIG. 3, a warning could be given to the dispatcher user, here in table 371: (Car 1: mountain route, battery stress).

Both scenarios can be combined, and the users for both the vehicle range estimation and the lifetime estimation can be the same person. There is however, a slightly different perspective in view of the timing: in situations that resemble the first scenario, the driver needs to have the range immediately (in the real time he is driving, and especially in unexpected situations as in the traffic congestion example), in situations that resemble the second scenario, the car owner should be informed sufficiently in advance to take the appropriate measures (e.g., schedule an inspection or replacement, change driving style "driving pattern").

The second scenario has been described with the onboard computers performing the calculation. Using the onboard computer is convenient, but not required. The calculations (all or most of them) could be performed by the central computer. In such case, the cars would not communicate range or lifetime indicators, but parameters, such as internal parameters.

For illustrative purposes, the scenarios had been described with every-day words, the description continues with more technical terms: a processor is part one of both of the mentioned computers (onboard computer, central computer); vehicle is more generic than car.

FIG. 4 is a collection of block diagrams for examples of calculation models with various complexities. The models receive input data (x), that means some of the mentioned parameters, and the models provide output data (y) (for example data 143, 144 as in FIG. 1). Input/output data can be simple numerical values, or vectors of values, or tables, or combinations thereof. The models can be implemented in a variety of ways, for example by modules.

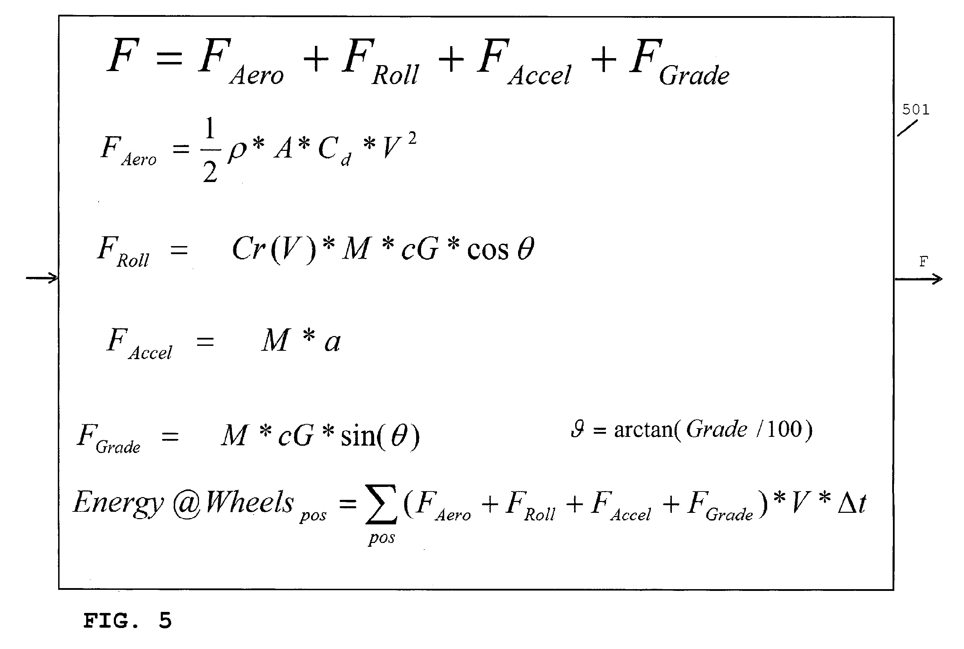

Model 401 can use a formula (i.e. a mathematical expression), y = f(x), for example, a percentage to reduce the range (x = old range, f(x) = percentage, y = new range). The percentages or other values can be based on statistics. Regression models are suitable as well. An example for model 401 is explained in connection with FIG. 5.

Model 402 can be a first-order physics-based empirical vehicle simulation model that uses look-up tables to facilitate fast execution. The tables can be based on pre-runtime calculations with subsystems and/or model components. Such models are especially useful when formulas are not available. The subsystems can be changed or modified during runtime (dynamic systems).

Model 403 can be a more sophisticated detailed physics-based model with subsystems capturing the dynamic and transient behavior representative of the various vehicles that are on the market.

Model 404 can use a connector to a simulation program 408 or to an expert system 409. Such a model can conveniently be used when the calculation is performed by the central computer. The simulation program or the expert system (with rule-based decision making) can run on a further computer that is coupled to the processor remotely. Model 404 uses an algorithm, for example, to propose a new route, as in the example with the cross-the-mountain route.

The models can also use data obtain from known techniques, such as data mining. The model can be validated (before run-time), for example, in that model calculations are compared to real-life measurements with real vehicles.

The models have different complexity, some models (e.g., 401 and 402) can operate with algebraic equations; but others (e.g., model 403) can operate with differential equations (higher order). Different complexities lead to different consumption of computational resources, and/or for any given resource, leads to different calculation times. The models can have different sizes, for example, in the number of codes to be executed, in the number of parameters to use, and the like. Likewise, different sizes lead to different resource consumption.

To summarize, the models can be classified into types, for example, into models with low complexity ("L", e.g., 401), medium complexity ("M", e.g., 402) and high complexity ("H", e.g., 403, 404). The complexity has influence on the selection of a model for calculating range or lifetime. Simplified, a low complexity model is used for fast calculation, a high complexity is used for high accuracy calculation (for that more resources, including time is available). Instead of mentioned 3 types, other classifications can be used as well, for example, the models could be classified by numbers on a scale from 1 to 10, could be classified according to the time it takes to do the calculation or the like.

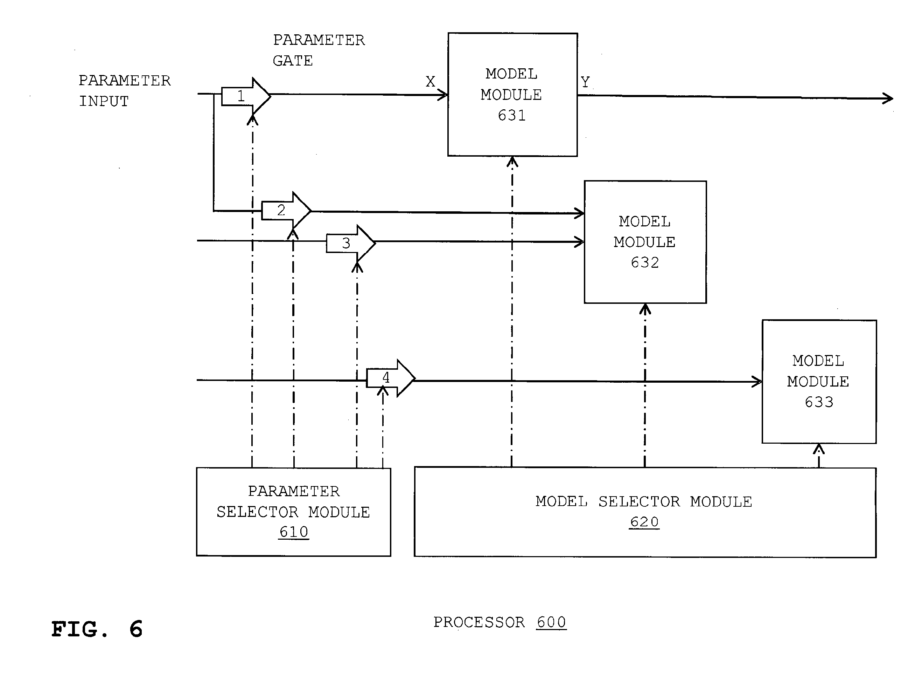

The selection of the models according to complexity will be illustrated in connection with FIG. 6. But before that, a model will be described with more detail.

FIG. 5 is an overview to model 501 to calculate the tractive force F (output) to propel the vehicle. The force is usually calculated in Newton. The Tractive Force equation is a function of a number of parameters which have effect on the range: F aero is the force needed to overcome the aerodynamic drag due to the vehicle design; ρ is the air density (kg/m3), A is the frontal area of the vehicle (in m2), Cd is the drag coefficient, V is the velocity of the vehicle (in meter per seconds). F roll is the force needed to overcome the rolling resistance of the vehicle due to tires and contact with the road surface, where Cr(V) is the tire resistance coefficient as a function of vehicle velocity, cG is the gravitational constant (9,81 m/s2), M is the mass of the vehicle (kg), is the slope of the road in radians (conversion from percent grade through arctan (grade / 100)). F accel is the force required to meet the acceleration needs dictated by the driver of the vehicle, where "a" is the vehicle acceleration (m/s2). F grade is the force required to negotiate the vehicle on a terrain with grade or inclination. To this Tractive Force, thus energy required at the wheels is calculated. Based on the vehicle speed and acceleration, the energy required by the driveline (includes all subsystems such as transmission, motors, engine, battery, etc.) is added to obtain the Total Energy required for the vehicle to follow a specified route to reach a specific destination. The model in FIG. 5 is simplified, and the components (e.g., F aero, F roll, F accel, F grade) can be calculated by separate sub-models that may have different complexities. Parameters that change dictate which sub-model to use at which complexity.

Having introduced some parameters as input values for calculation, the description continues with a more detailed but non-limiting overview to further example parameters. There is a variety of parameters available that can be used by the calculation models (and by the presentation models). Parameters can be distinguished by the physical distance of the parameter sensors to the car. Internal parameters are obtained by sensors that associated with the car (that are therefore even moving with the car) and that deliver data to the onboard computer, for example, by data busses. Internal parameters have the sensors for example in the battery management system (BMS).

External parameters (or "exogenous" parameters) are obtained by sensors or other information sources outside the car. The external parameters are delivered to the onboard computer, for example, by communication from the central computer (of the fleet management), by public broadcast (e.g., traffic congestion warning systems). In some sense, the external parameters are from sensors that are not moving with the car.

Some parameters can both be internal and external parameters. For example, a parameter for a road condition can be obtained by rain sensor in the car (internal parameter), as well as obtained from weather data along the route (external parameter).

Further distinctions are possible for parameters that relate to a past time, current time of driving, or to the future (estimation, real-time, anticipatory parameters). For example, the rain sensor can only indicate rain at the time of driving, whereas weather data can include forecasts with rain to be expected within the next hours.

Parameters can also be obtained from other vehicles, for example, from vehicles belonging to the same fleet, so that parameters are exchanged directly between vehicles (e.g., through communication network 375) or indirectly, relayed trough central computer 370.

Parameters can also be distinguished along the ownership of the parameter provider. For example, some weather or traffic data is access-restricted and might be available only upon subscription to service channels with extra payment schemes. In such cases - private parameters - the distribution of the parameters is limited to the subscribers. Other parameters - public parameters - for example, relating to the geography along a route are publicly available without restrictions.

The following sections give examples for parameters. For convenience, parameters are labeled with uppercase letters. Example internal parameters are introduced first.

The parameter CURRENT LOCATION gives the geographic location of the vehicle at the time the processor receives the parameter. Technologies to obtain location data are (or will be) commercially available, for example, with Global Positioning System (GPS), Galileo (Europe's global navigation satellite system), Glonass (satellite navigation system, in Russia) or others.

The parameter VELOCITY (or "speed") is usually obtained from the built-in tachometer. That is an example for a re-use of a sensor that is available in vehicles in any case.

The parameter TIRE PRESSURE could be given as absolute values or relative values (e.g., 10 percent below average value, or sudden pressure drop); techniques to monitor the tire pressure are known in the art, for example, onboard computers do receive the data from sensors.

The parameter CABIN TEMPERATURE can be distinguished into a current temperature that is being measured, and a desired temperature that the driver or a passenger set for the air conditioner.

The parameter LOAD WEIGHT can be measured by a variety of sensors, including sensors that monitor a load area of the vehicle, data that describes the load (for example, from logistics).

The parameter PASSENGER NUMBER can be obtained from seat sensors, or even from personalized data that relates to the passengers. (Note that for some sports, the participants are classified into, for example, heavy-weight or lightweight)

The parameter ACCESSORY LOAD can be composed from numeric values for several energy consumers (cf. FIG. 1, 190), such as air conditioner (in cars typically running at about 1000 Watts), Infotainment system (radio, CD-player, navigation system), power steering ("steering pump"). Energy consumption could be measured by a sensor or taken into account from catalogue data.

The parameter THERMAL CONDITIONS for the battery is available at the BMS (cf. FIG. 1, 130).

The parameter DOD (Depth of Discharge) relates to the battery; typical values range between 90 % and 20%.

The parameter SOC (State-of-Charge) also relates to the battery and is a critical measure needed by the battery management system BMS. SOC determination methods are battery specific and extremely critical. In addition to the material and chemistry of the battery pack, DOD and SOC depend on the charging and discharging history, the internal and external temperatures of the battery, the age of the battery, the usage history etc.

The parameter SOH (State-of-Health) is a subjective estimation based on measurable performance parameters of the battery (such as charge acceptance, internal resistance, voltage, self-discharge, etc.) in comparison to these parameters in a new battery.

The parameter DRIVER ACCELERATOR represents the accelerator demand requested by the driver of the vehicle which may include the most recent inputs from this particular event and/or the driving pattern history of this particular driver registered for a particular fleet.

The parameter CHARGE RATE relates to the battery and includes rate of charging and discharging battery. The charging/discharging characteristics reflect the rate of energy being removed or added to the battery and include resistances and heat transfer losses.

The parameters INSTANTANEOUS POWER CONSUMPTION is conveniently provided by the battery management system BMS (FIG. 1, 130), "current" here refers to the time of measurement.

The following sections give examples for external parameters.

The parameter TERRAIN GRADE relates to the inclination of the road (geographical parameter). Conveniently this parameter is given in percent, with a plus-minus indication to distinguish uphill driving and downhill driving. For example, a range of 100 km can be achieved on a flat road; however, a 1% grade reduces this range to 90 km. (The model would be of the formula type). An example for using TERRAIN GRADE was given in FIG. 5 with an equivalent measurement unit (radians).

The parameter ROAD CONDITIONS relates to the surface of the road. The road can be wet or dry, the road can be smooth or paved, etc. The parameter can be collected internally by car sensors, or collected externally (road map, relation to actual weather conditions)

The parameter WEATHER CONDITIONS relates to sun and wind. For example, the range is sensitive to aerodynamics, for example, a change in the wind conditions. Climate conditions (temperature, humidity) are similar.

The parameter TRAFFIC CONDITIONS in conveniently given as a vector (or table), for example, as in the first scenario with the traffic congestion along the route, together with an indication of expected waiting times, average vehicle speeds of moving traffic.

There is no need to have sensors for all parameters, rather some parameters are related to the manufacturing and maintenance of the particular car, and some parameters are related to the driver as a person.

For example, Enterprise Resource Planning (ERP), Customer Relationship Management (CRM) or other data system can provide the parameter VEHICLE CLASS, for example, mid-size vehicle in the 1250 kg weight class.

The parameter TYPE OF BATTERY relates to the chemical compounds used in the battery, and/or relates to the structure of the battery. Batteries with lithium have typical self-discharge rates of 2 % to 3 % per month. So for example, for a vehicle that has not been driven for a month, that rate can be taken into account.

The parameter RATED DATA describes the battery as manufactured (e.g., rated voltage)

The parameter DRIVING BEHAVIOR HISTORY relates to the driver, who is for example, a lease customer, or rent-a-car customer, some drivers can be qualified as "aggressive" drivers and others as "conservative" drivers.

The parameter DRIVING CYCLES are industry standards to describe driving patterns for testing cars (not only electric cars), such as for example NEDC (New European Driving Cycle), FTP (US EPA Urban Driving Cycle), Hwy (US EPA Highway Driving Cycle), or US06 (more aggressive driving cycle based on driving patterns in the US). For example, the range could be calculated under consideration of different CYCLES. For example, for a vehicle running in Europe, NEDC could be used, for a vehicle running long-distance in the US, Hwy could be used. The parameter CYCLES is an example for a parameter that can be preselected for evaluation for most of the cars in a fleet.

The mentioned parameters are only example parameters, and other parameters can be used as well, other parameter can be made available as well. Concerning the performance indicators (FIG. 1, 150), some parameters are more dominant for calculating the range (151), while others influence the calculation of the battery lifetime (152).

For example, to calculate the range with high fidelity, the following parameters are can be used: VELOCITY, TIRE PRESSURE, LOAD WEIGHT, AIR CONDITIONER LOAD, Thermal Cooling System Load, ROAD GRADE, Driver Acceleration Demand, Driver Braking Input, Car Cabin Temperatures, etc.

For example, to calculate the lifetime, the following parameters are frequently used: TYPE OF BATTERY, DRIVING BEHAVIOR HISTORY, CHARGE RATE, CHARGE FREQUENCY, CYCLING FREQUENCY, and TIME BETWEEN CHARGES

However, distinguishing the parameters (at the calculation input) into two groups according to the desired performance indicators (at the calculation output) is not required. Numerous parameters, such as DRIVING BEHAVIOR HISTORY have an effect on both the driving range and the lifetime of the battery. Here is the potential to use synergy effects: parameters and intermediate calculation results can be used for both performance indicators.

FIG. 6 is a block diagram of processor 600 that obtains the performance indicators with details regarding the selection of parameters and calculation. Processor 600 can be part of an onboard computer (cf. 160) or part of a central computer (cf. 170), or even part of a combination of both computers.

As illustrated, processor 600 comprises a plurality of modules 631, 632, 633, parameter selector module 610, model selector module 620, and a plurality of parameter gates (1, 2, 3, 4). Modules 631, 632, 633 ("model modules") are examples for implementations of the calculation models; one module can implement one or more calculation models.

As explained above in connection with FIG. 4, models receive input data x (parameters) and provide output data y. Parameter selector module 610 receives the parameters (horizontal solid lines) and selectively forwards some of them the models. This is illustrated by parameter gates that receive control information from selector module 610 (point-dash-line) to forward or to block parameters. Likewise, selector module 620 selects (or de-selects) models; a selected model provides output (and consumes resources); a de-selected model does not provide output (and does not consume resources).

The models that are implemented by modules 631, 632, 633 can be any of the models that had been introduced in connection with FIG. 4.

Both selector modules 610 and 620 operate according to rules; modules 610/620 operate similar to an expert system model (cf. 404 in FIG. 4). The description continues by returning to the first scenario and explaining how different models are selected (and deselected).

FIG. 7 is a copy of the simplified map of FIG. 2 with indications of calculation models 730 with different complexity types that are selected consecutively and parameter driven. The models are given by rectangles that are associated with the locations A, A1 and A2. The sequence indication "1st, 2nd, ..5th" correspond to the description of FIG. 1. Inside the boxes, "L", "M", and "H" indicate complexity types (cf. FIG. 4), and results are given as the RANGE.

At location A, the computer performs the first selection. A model is selected that uses regression or look-up tables to provide RANGE.A. The accuracy of that initial range estimation is sufficient; the model has low complexity, but allows for a quick initialization.

At location A1, the computer performs the second selection. A model is selected that uses empirical data to provide RANGE.A, again but in higher accuracy, the model can be of medium complexity (or relatively higher to the previously selected model of higher complexity).

A location A2, the computer performs the third, fourth and fifth selections, so consecutively 3 models are selected. The 3rd selection (medium-complexity model using a factor that was obtained empirically) gives RANGE.A2; the 4th selection (medium-complex model) optimizes that range for an alternative route (across the mountains); and the 5th selection is for a highly complex model that simulates driving across the mountains under considerations of various additional parameters, such as the power consumption of the air conditioner and the outside temperature along the route. As mentioned earlier, there is sufficient time available so that the highly complex model can be used.

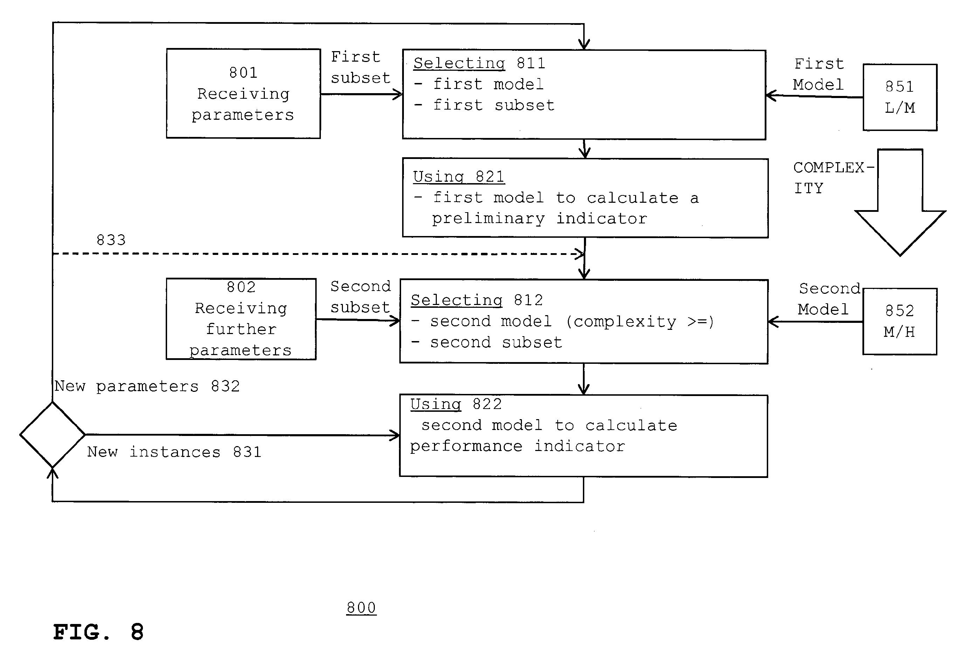

FIG. 8 is a flow chart of a computer-implemented method 800 for obtaining performance indicator 150. As mentioned, indicator 150 is for a vehicle (e.g., vehicle 100) with an electric motor that is powered by energy from an on-board battery. Upon receiving 801 parameters that are related to the operation of the vehicle, first calculation model 851 is selected 811. Model 851 has a predefined first complexity type (e.g. L or M). A first parameter subset is selected from the received parameters, and the first calculation model 861 and the first parameter subset are used 812 to calculate a preliminary performance indicator.

Upon receiving further parameters 802, second calculation model 852 is selected 812. Model 812 has a predefined second complexity type (e.g., M or H) that in comparison indicates equal or higher complexity than the first complexity type of the first calculation model 851. A second parameter subset from the received further parameters is selected, and the second calculation model 852 and the second parameter subset are used 822 to calculate the performance indicator.

Selecting second calculation model 852 can be based on pre-assigned priorities for some of the parameters so that parameter priority overrules complexity.

The preliminary indicator can be an input parameter for the second calculation model.

Receiving parameters, selecting calculation models and calculating indicators is being repeated 831 with up-dated instances of the parameters. The comparison is being re-set upon receiving new parameters 832, 833.

Selecting further calculation models can be deferred until using the second calculation model is completed.

Selecting the calculation models can be based on a pre-assigned execution sequence for calculation models.

The complexity types of the calculation models can be derived from the processor resource consumption (e.g., memory consumption, time needed for calculation etc.). Complexity increases with resource consumption.

As discussed above, performance indicator 150 can be driving range 151 for the vehicle. In this case, receiving parameters and using calculation models is executed while the vehicle obtains electrical energy from its battery (cf. FIG. 1, 120,121, 122).

The method can be executed by a processor that is mounted on the vehicle, (cf. the example of processor 160 mounted on vehicle 100). Processor 160 receives the parameters that are related to the operation of the vehicle from sensors that are also mounted on the vehicle (cf. 163, 130). Processor 160 can also receive the further parameters from sensors that are located outside the vehicle (e.g., via interface 180).

Alternatively, method 800 is executed by a processor that is located outside the vehicle (cf. central computer 170). In this implementation, parameters are bi-directionally communicated between the processor and the vehicle through radio interface 180. Optionally, processor 170 executes the method in parallel for multiple vehicles (cf. scenario 2 as an example).

As discussed above, performance indicator 150 can be life-time value 152 for the battery 120. Combinations are also possible: During initial executions of method 800, the performance indicator can be range 151 of the vehicle, and for further executions, the performance indicator can be life-time value 152 for the battery 120.

Embodiments of the invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device, for execution by, or to control the operation of, data processing apparatus, e.g., a programmable processor, a computer, or multiple computers. A computer program, can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site (e.g., in the vehicle) or distributed across multiple sites (e.g. central computer) and interconnected by a communication network. The methods can all be executed by corresponding computer products on the respective devices.

Method steps of the invention can be performed by one or more programmable processors executing a computer program to perform functions of the invention by operating on input data and generating output. Method steps can also be performed by, and an apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Such storage devices may also be provisioned on demand and be accessible through the Internet (Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. Client computers can also be mobile devices, such as smart phones, tablet PCs or any other handheld computing device. The components of the system can be interconnected by any form or medium of digital data communication, e.g., a communication network. Examples of communication networks include a local area network (LAN) and a wide area network (WAN), e.g., the Internet or wireless LAN or telecommunication networks. The computing system can include clients and servers. A client and server are generally remote from each other and typically interact through a communication network. The relationship of client and server arises by virtue of computer programs running on the respective computers and having a client-server relationship to each other.

The description closes with a discussion of further options. There is no need to limit the application of the approach to battery only vehicles. Hybrid cars are vehicles with power trains (cf. 112 in FIG. 2) that are not only coupled to an electric motor but also coupled to a combustion engine. Parameters of the combustion engines can be taken into account as well, especially as additional issues such as Greenhouse Gases (GHG) and emissions become more and more important.

Further performance indicators are, for example, indicators of battery overheating, to prevent potential hazards or other risks. In vehicles, existing onboard computers can be upgraded to the functions that have been described, or computers can be dedicated for theses functions.

## Claims

1. Computer-implemented method (800) for obtaining a performance indicator (150) for a vehicle (100) with an electric motor (110) that is powered by energy from an on-board battery (120); the method (800) comprising:
upon receiving (801) parameters that are related to the operation of the vehicle,
selecting (811) a first calculation model (851) having a predefined first complexity type (L / M), selecting a first parameter subset from the received parameters, and
using (812) the first calculation model (861) and the first parameter subset to calculate a preliminary performance indicator;
the method is **characterised in that**
upon receiving further parameters (802), selecting (812) a second calculation model (852) having a predefined second complexity type (M / H) that in comparison indicates equal or higher complexity than the first complexity type of the first calculation model (851), selecting a second parameter subset of the received further parameters, and using (822) the second calculation model (852) and the second parameter subset to calculate the performance indicator.

2. Method (800) according to claims 1 or 2, wherein selecting the second calculation model (852) is based on pre-assigned priorities for some of the parameters so that parameter priority overrules complexity.

3. Method (800) according to any one of the preceding claims, wherein the preliminary indicator is an input parameter for the second calculation model.

4. Method (800) according to any one of the preceding claims, wherein receiving parameters, selecting calculation models and calculating indicators is being repeated (831) with up-dated instances of the parameters, and wherein the comparison is being re-set upon receiving new parameters (832, 833).

5. Method (800) according to any one of the preceding claims, wherein the complexity types of the calculation models are derived from the processor resource consumption, wherein complexity increases with resource consumption.

6. Method (800) according to any one of the preceding claims, wherein the performance indicator is a driving range (151) for the vehicle wherein receiving parameters and using calculation models is executed while the vehicle (100) obtains (121, 122) electrical energy from its battery (120).

7. Method (800) according to any one of the preceding claims, executed by a processor (160) that is mounted on the vehicle (100).

8. Method (800) according to claim 7, wherein the processor (160) receives the parameters that are related to the operation of the vehicle from sensors (163, 130) that are also mounted on the vehicle (100).

9. Method (800) according to claim 7, wherein the processor (160) receives further parameters from sensors that are located outside the vehicle (100).

10. Method (800) according any one of the preceding claims, wherein the performance indicator (150) is a life-time value (152) for the battery (120).

11. A computer program product that - when loaded into a memory of a computer and being executed by at least one processor of the computer - performs the steps of the computer-implemented method according to any of claims 1 to 10.

12. Computer (160/170, 600) for obtaining a performance indicator (150) for a vehicle with electric motor (110) that is powered by energy from an on-board battery (120), comprising:
a parameter selector module (610) to select first and second parameter subset from parameters that relate to the operation of the vehicle, and
a model selector module (620) to select a first calculation model (851) with a predefined first complexity type for calculating a preliminary performance indicator from the first parameter subset; when further parameters become available, to select a second calculation model (852) with a predefined second complexity type that in comparison indicates equal or higher complexity than the first complexity type of the first calculation model (851), for calculating the performance indicator (150) from the second parameter subset.

13. The computer according to claim 12, wherein the selector modules select the second calculation model (852) based on pre-assigned priorities for some of the parameters so that parameter priority overrules complexity.

14. The computer according to claim 12 or 13, in that the function of the modules is executed by a processor (160) that is mounted on the vehicle (100).

15. The computer according to any one of claims 12 to 14, wherein the performance indicator is a range of the vehicle, or the performance indicator is a life-time value for the battery.

## Patentansprüche

1. Computerimplementiertes Verfahren (800) zum Erhalten eines Perfomance-Indikators (150) für ein Fahrzeug (100) mit einem Elektromotor (110), der durch Energie aus einer Bordbatterie (120) angetrieben wird; das Verfahren (800) umfassend:
beim Empfangen (801) von Parametern, die mit dem Betrieb des Fahrzeugs verbunden sind, Auswählen (811) eines ersten Berechnungsmodells (851) mit einem vorgegebenen ersten Komplexitätstyp (L / M), Auswählen einer ersten Parameterteilmenge aus den empfangenen Parametern, und Verwenden (812) des ersten Rechenmodells (861) und der ersten Parameterteilmenge zur Berechnung eines vorläufigen Performance-Indikators;
das Verfahren ist **dadurch gekennzeichnet, dass** beim Empfangen weiterer Parameter (802), Auswählen (812) eines zweiten Berechnungsmodells (852) mit einem vorgegebenen zweiten Komplexitätstyp (M / H), der im Vergleich gleiche oder höhere Komplexität als der erste Komplexitätstyp des ersten Berechnungsmodells (851) zeigt, Auswählen einer zweiten Parameterteilmenge der erhaltenen weiteren Parameter und Verwenden (822) des zweiten Berechnungsmodells (852) und der zweiten Parameterteilmenge zur Berechnung des Performance-Indikators.

2. Verfahren (800) nach den Ansprüchen 1 oder 2, wobei das Auswählen des zweiten Berechnungsmodells (852) auf vorher zugewiesenen Prioritäten für einige der Parameter basiert, so dass Parameterpriorität Vorrang vor Komplexität hat.

3. Verfahren (800) nach einem der vorhergehenden Ansprüche, wobei der vorläufige Indikator ein Eingabeparameter für das zweite Berechnungsmodell ist.

4. Verfahren (800) nach einem der vorhergehenden Ansprüche, wobei das Empfangen von Parameters, Auswählen von Berechnungsmodellen und Berechnen von Indikatoren mit aktualisierten Beispielen der Parameter wiederholt wird (831), und wobei der Vergleich beim Empfang neuer Parameter (832, 833) neu eingestellt wird.

5. Verfahren (800) nach einem der vorhergehenden Ansprüche, wobei Komplexitätstypen der Berechnungsmodelle vom Ressourcenverbrauch des Prozessors abgeleitet werden, wobei die Komplexität mit dem Ressourcenverbrauch steigt.

6. Verfahren (800) nach einem der vorhergehenden Ansprüche, wobei der Performance-Indikator eine Reichweite (151) für das Fahrzeug ist, wobei Empfangen von Parametern und Verwenden von Berechnungsmodellen ausgeführt wird, während das Fahrzeug (100) elektrische Energie aus seiner Batterie (120) erhält (121, 122).

7. Verfahren (800) nach einem der vorhergehenden Ansprüche, ausgeführt von einem Prozessor (160), der an das Fahrzeug (100) montiert ist.

8. Verfahren (800) nach Anspruch 7, wobei der Prozessor (160) die Parameter, die mit dem Betrieb des Fahrzeugs verbunden sind, von Sensoren (163, 130) empfängt, die ebenfalls an dem Fahrzeug (100) montiert sind.

9. Verfahren (800) nach Anspruch 7, wobei der Prozessor (160) weitere Parameter von Sensoren empfängt, die sich außerhalb des Fahrzeugs (100) befinden.

10. Verfahren (800) nach einem der vorhergehenden Ansprüche, wobei der Performance-Indikator (150) ein Betriebsdauerwert (152) für die Batterie (120) ist.

11. Computerprogrammprodukt, das - wenn es in einen Speicher eines Computers geladen und durch mindestens einen Prozessor des Computers ausgeführt wird - die folgenden Schritte des computerimplementierten Verfahrens nach einem der Ansprüche 1 bis 10 durchführt.

12. Computer (160/170, 600) zum Erhalten eines Performance-Indikators (150) für ein Fahrzeug mit Elektromotor (110), der durch Energie aus einer Bordbatterie (120) angetrieben wird, umfassend:
ein Parameterauswahlmodul (610) zum Auswählen einer ersten und zweiten Parameterteilmenge von Parametern, die mit dem Betrieb des Fahrzeugs verbunden sind, und
ein Modellauswahlmodul (620) zum Auswählen eines ersten Berechnungsmodells (851) mit einem vorgegebenen ersten Komplexitätstyp zur Berechnung eines vorläufigen Performance-Indikators aus der ersten Parameterteilmenge; wenn weitere Parameter verfügbar werden, Auswählen eines zweiten Berechnungsmodells (852) mit einem vorgegebenen zweiten Komplexitätstyp, der im Vergleich gleiche oder höherere Komplexität als der erste Komplexitätstyp des ersten Berechnungsmodells (851) zeigt, zur Berechnung des Performance-Indikators (150) von der zweiten Parameterteilmenge.

13. Computer nach Anspruch 12, wobei die Auswahlmodule das zweite Berechnungsmodell (852) auf Basis von vorher zugewiesenen Prioritäten für einige der Parameter auswählen, so dass Parameterpriorität Vorrang vor Komplexität hat.

14. Computer nach Anspruch 12 oder 13, dadurch dass die Funktion der Module durch einen Prozessor (160) ausgeführt wird, der auf dem Fahrzeug (100) montiert ist.

15. Computer nach einem der Ansprüche 12 bis 14, wobei der Performance-Indikator eine Reichweite des Fahrzeugs ist, oder der Performance-Indikator ein Betriebsdauerwert für die Batterie ist.

## Revendications

1. Procédé (800) mis en oeuvre par ordinateur pour l'obtention d'un indicateur de performance (150) pour un véhicule (100) à moteur électrique (110) alimenté par l'énergie d'une batterie embarquée(120) ; le procédé (800) comprenant : lors de la réception (801) de paramètres qui sont en rapport avec la conduite du véhicule, la sélection (811) d'un premier modèle de calcul (851) ayant un premier type de complexité (L/M) prédéfini, la sélection d'un premier sous-ensemble de paramètres provenant des paramètres reçus et utilisant (812) le premier modèle de calcul (861), et le premier sous-ensemble de paramètres pour calculer un indicateur de performance préliminaire ;
le procédé est **caractérisé en ce que** :
lors de la réception d'autres paramètres (802), la sélection (812) d'un second modèle de calcul (852) ayant un second type de complexité (M/H) prédéfini qui, en comparaison, indique une complexité équivalente ou supérieure à celle du premier type de complexité du premier modèle de calcul (851),
la sélection d'un second sous-ensemble de paramètres provenant d'autres paramètres reçus, et l'utilisation (822) du second modèle de calcul (852) et du second sous-ensemble de paramètres pour calculer l'indicateur de performance.

2. Procédé (800) selon les revendications 1 ou 2, dans lequel la sélection du second modèle de calcul (852) est basée sur des priorités préétablies pour certains paramètres de telle sorte que la priorité des paramètres dépasse la complexité.

3. Procédé (800) selon l'une quelconque des revendications précédentes, dans lequel l'indicateur préliminaire est un paramètre d'entrée pour le second modèle de calcul.

4. Procédé (800) selon l'une quelconque des revendications précédentes, dans lequel la réception de paramètres, la sélection des modèles de calcul et le calcul des indicateurs se répètent (831) avec les instances mises à jour des paramètres, et dans lequel la comparaison est remise à zéro lors de la réception de nouveaux paramètres (832, 833).

5. Procédé (800) selon l'une quelconque des revendications précédentes, dans lequel les types de complexité des modèles de calcul sont dérivés de la consommation des ressources du processeur, dans lesquels la complexité augmente avec la consommation des ressources.

6. Procédé (800) selon l'une quelconque des revendications précédentes, dans lequel l'indicateur de performance est une plage de conduite (151) pour le véhicule, dans lequel la réception de paramètres et l'utilisation de modèles de calcul sont exécutées alors que le véhicule (100) obtient (121, 122) de l'énergie électrique de sa batterie (120).

7. Procédé (800) selon l'une quelconque des revendications précédentes, exécuté par un processeur (160) qui est monté sur le véhicule (100).

8. Procédé (800) selon la revendication 7, dans lequel le processeur (160) reçoit les paramètres qui sont liés à la conduite du véhicule à partir de capteurs (163, 130) qui sont aussi montés sur le véhicule (100).

9. Procédé (800) selon la revendication 7, dans lequel le processeur (160) reçoit des paramètres supplémentaires à partir de capteurs qui sont situés à l'extérieur du véhicule (100).

10. Procédé (800) selon l'une quelconque des revendications précédentes, dans lequel l'indicateur de performance (150) est une valeur de durée de vie (152) pour la batterie (120).

11. Produit de programme d'ordinateur qui - lorsqu'il est chargé dans une mémoire d'un ordinateur et est exécuté par au moins un processeur de l'ordinateur - effectue les étapes du procédé mis en oeuvre par ordinateur selon l'une quelconque des revendications 1 à 10.

12. Ordinateur (160/170, 600) pour l'obtention d'un indicateur de performance (150) pour un véhicule à moteur électrique (110) qui est alimenté par l'énergie d'une batterie embarquée(120), comprenant :
un module de sélection de paramètres (610) pour sélectionner un premier et un second sous-ensemble de paramètres à partir de paramètres qui se rapportent au fonctionnement du véhicule,
et un module de sélection de modèle (620) pour sélectionner un premier modèle de calcul (851) avec un premier type de complexité prédéfini, pour calculer un indicateur de performance préliminaire à partir du premier sous-ensemble de paramètres ; lorsque d'autres paramètres deviennent disponibles, pour sélectionner un second modèle de calcul (852) avec un second type de complexité prédéfini qui, en comparaison, indique une complexité équivalente ou supérieure à un premier type de complexité du premier modèle de calcul (851), pour calculer l'indicateur de performance (150) à partir du second sous-ensemble de paramètres.

13. Ordinateur selon la revendication 12, dans lequel les modules de sélection sélectionnent le second modèle de calcul (852) en fonction de priorités préétablies pour certains paramètres de telle sorte que la priorité des paramètres annule la complexité.

14. Ordinateur selon les revendications 12 ou 13, dans lequel la fonction des modules est exécutée par un processeur (160) qui est monté sur le véhicule (100).

15. Ordinateur selon l'une quelconque des revendications 12 à 14, dans lequel l'indicateur de performance est une plage de conduite du véhicule, ou l'indicateur de performance est une valeur de la durée de vie de la batterie.
